# EUROPEAN PATENT SPECIFICATION

(11) **EP 4 279 253 B1**
(45) Date of publication and mention of the grant of the patent: **08.05.2024**
(21) Application number: 22174547.4
(22) Date of filing: 20.05.2022
(51) Int. Cl.: B29C 65/10, B29C 65/00, F24H 3/04, B29L 31/28, B29L 31/46

(54) **HAND HOT AIR WELDING DEVICE**
HEISSLUFTHANDSCHWEISSGERÄT
APPAREIL À AIR CHAUD POUR LE SOUDAGE À LA MAIN

(43) Date of publication of application: 22.11.2023
(73) Proprietor: Meretech s.r.o., 468 04 Jablonec nad Nisou (CZ)
(72) Inventor: Preissler, Martin, 463 11 Liberec 30 (CZ)
(74) Representative: Musil, Dobroslav

(56) References cited:
- US-A1- 2008 295 971
- US-A1- 2010 147 465

## Description

### Technical field

The invention relates to a hand hot air welding device comprising a handle in which control electronics are arranged, the rear part of the handle being associated with an air hose in which is arranged a power supply to the control electronics and further to a heater which arranged in an ending outlet pipe terminating in a hot air outlet.

### Background art

Hand hot air welding devices are used for manual welding of plastic products.

The simplest devices are designed for universal use and include a heating device, a fan for generating an air stream and a control unit. Such devices usually have a power supply in the rear part of the handle.

Special devices for welding plastics usually have a higher output power and do not have their own fan. Such a device comprises a metal working part terminating in a hot air outlet. The metal working part accommodates a heating element which is fixedly connected to a handle to the rear part of which is fixedly connected a compressed air supply from an external fan and a power supply to the heating element. Cold air passes through the handle of the device and is heated in the front metal part. The power supply is usually mounted in a hose. A welding nozzle is located on the metal working part. The welding nozzle must occupy an optimal position relative to the weld during welding. The welder often has to rotate the hand welding device while working, and the hose gets twisted, so the welder has to stop working and twist the hose back, which reduces his performance.

US2008295971 describes a device for manual welding of plastics is known that partially eliminates this problem. The hand welding device comprises a metal working part which is terminates in a hot air outlet and in which a heating element is arranged. The heating element is fixedly connected to a handle which accommodates control electronics. Cold air passes through the handle and is heated in the front metal part. In this solution, the front metal part is fixedly connected to the handle and a compressed air supply hose with a power supply is pivotally mounted in the handle, with the connection sealed by an "O" ring to ensure air supply tightness. This solution is very simple and cheap, but unfortunately it does not work very well. The fixed connection of the front metal part, on which a welding nozzle is located, to the handle and the rotatable mounting of the hose in the handle ensure that the handle, the front metal part and the welding nozzle can rotate independently of the supply hose, but very often the hose jams in the handle. In manual welding this is essential. If the cover does not rotate smoothly or jams, it makes the work difficult for the welder, because he has to untwist the supply hose and the cable. Such work is more demanding and affects the weld quality or the welder's performance. Furthermore, the hose and the supply cable are damaged more quickly, as they twist unnecessarily.

The solution described in US2010147465, in which the flexible connection line is connected to the welding unit and/or the power unit by means of a rotary connector, has the same disadvantages, so that the whole handle, i.e., the handle, the hot air outlet and the electronics, rotates relative to the flexible connection line.

The objective of the invention is to provide a hand-held hot air welding device in which the compressed air supply hose and the power supply cable are not twisted.

### Principle of the invention

The objective of the invention is achieved by a hand hot air welding device, whose principle consists in that the control electronics of the hand hot air welding device are fixedly mounted in a housing of the electronics. Attached to the control electronics housing is a cover for connecting an air hose, wherein on the electronics housing is pivotally mounted a handle which is fixedly connected to a metal outlet pipe. This arrangement prevents the compressed air supply hose from twisting during manual welding and thus facilitates the welder's work.

In a preferred embodiment, the front end of the handle is fixedly mounted in a transition sleeve which is pivotally mounted on the electronics housing, wherein it is secured against axial displacement and an ending outlet pipe is attached to its front part via an insulating ring.

In order to achieve a fixed connection between the transition sleeve and the handle, a split flange is formed at the front end of the handle with at least two projections which fit into corresponding recesses in the transition sleeve.

To secure the axial position of the handle on the electronics housing, an inner annular projection is formed on the inner side of the transition sleeve, which is accommodated in a recess formed on the front part of the electronics housing along its entire outer circumference.

To facilitate assembly, the transition sleeve is made up of two parts, which are provided with snap latches for mutual connection.

For connection to the transition sleeve, a hem is formed on the ending outlet pipe, in which holes for screws are formed, wherein the insulating ring is mounted between the hem and the transition sleeve.

### Description of drawings

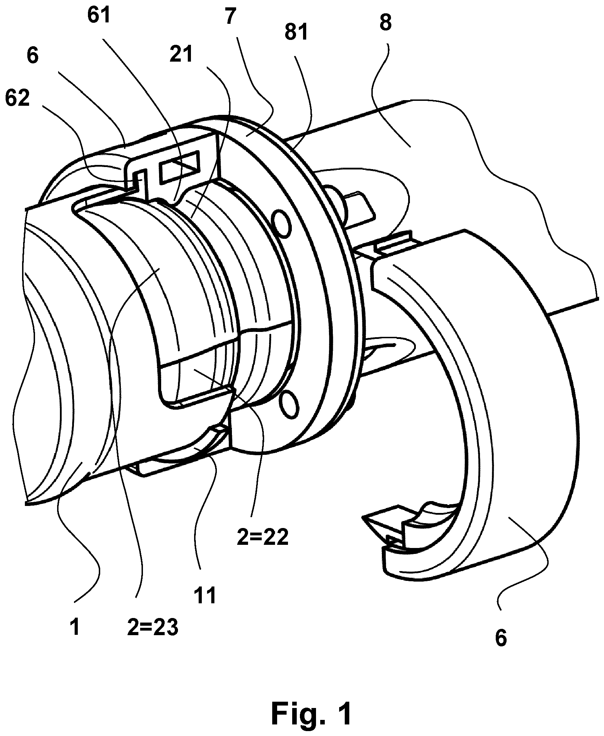

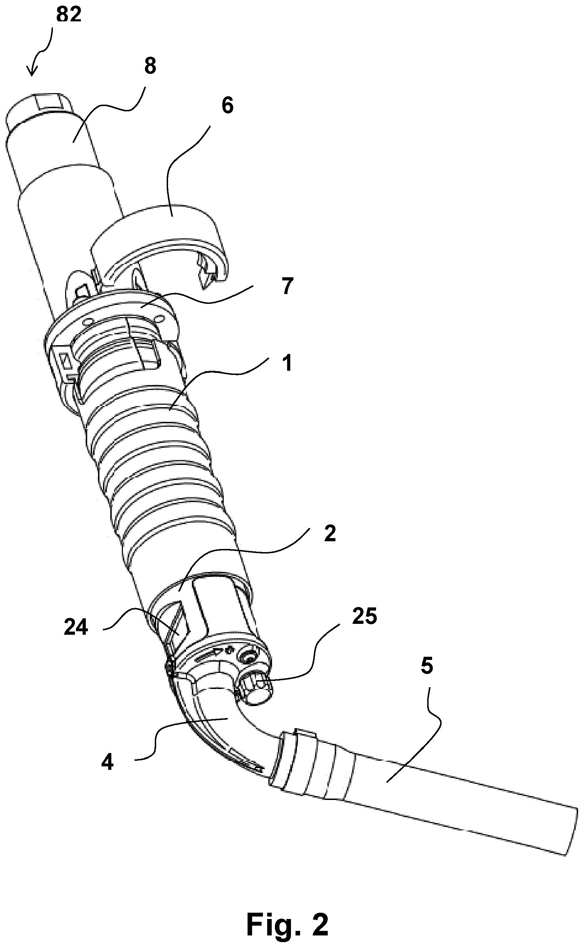

For ease of understanding, the invention described below is schematically illustrated in the accompanying drawings, wherein Fig. 1 shows a detail of the connection of a handle of a hand hot air welding device to an ending outlet pipe and Fig. 2 shows a view of the hand hot air welding device with a partial section of the area where the handle is connected to the ending outlet pipe.

### Examples of embodiment

A hand-held hot air welding device comprises a handle **1** which is pivotally mounted on an electronics housing **2** in which known control electronics of the hand-held hot air welding machine, not shown in more detail, are fixedly mounted. Attached to the rear part of the electronics housing **2** is a fixed cover **4** provided with an inlet for connecting an air hose **5** in which an unillustrated power supply cable is arranged. By firmly attaching the air hose **5** to the electronics housing **2,** its stability against rotation is ensured so that the rotatable handle **1** mounted thereon can rotate without the risk of carrying the air hose **5** with it and rotating it.

The handle 1 is provided at its front end with a split flange **11,** which is formed by at least two projections which are designed to fit into corresponding recesses **62** in a transition sleeve **6,** which consists of two semi-ringed parts which are provided with snap latches for mutual connection. This ensures that the two parts of the transition sleeve **6** do not rotate on the handle **1**. In the front part of the electronics housing **2,** an outer recess **21** is formed along the entire circumference, into which an inner annular projection **61** formed in both parts of the transition sleeve **6** fits. Thus, when the handle **1** is rotated on the electronics housing **2,** it is secured against axial displacement relative to the electronics housing **2** and components connected thereto.

An ending outlet **pipe 8** is connected to the front part of the transition sleeve **6** via an insulating ring **7** by means of screws which pass through the holes in the hem **81** of the ending outlet pipe **8** and are screwed into the transition sleeve **6.** This ensures the joint rotation of the ending outlet pipe **8** and the handle **1** on the electronics housing **2.** At the same time, a firm connection between the two parts of the transition sleeve is ensured. The ending outlet pipe **8** terminates in a hot air outlet **82** in which, or in its vicinity, a known unillustrated welding nozzle is fixedly mounted on the outlet pipe **8.**

Inside the metal outlet pipe **8,** an unshielded heating element is disposed in a known manner and connected to the power supply via the control electronics. The control electronics are fixedly housed in the electronics housing **2,** which consists of a lower part **22** and an upper part **23.**

The air supplied by the air hose **5** passes through the electronics housing **2** into the metal outlet pipe **8**, in which it is heated by the heating element and exits through the hot air outlet **82.** A display **24** and an encoder control member **25** are mounted in the rear part of the electronics housing **2.**

As a result, the assembly of the handle **1** and the ending outlet pipe **8** with an unillustrated welding nozzle is pivotally mounted on the electronics housing **2** and is secured against axial displacement relative to this housing **2** and components connected thereto. The stable position of the electronics housing **2** during rotation of the handle **1** is ensured by the air hose **5** fixedly connected via the cover **4** to the electronics housing **2.** Thus, the welder is able to rotate the welding nozzle by means of the handle **1** to the required position during work without the risk of the air hose **5** rotating, which facilitates his work and prevents interruption of the welding process, thereby increasing the quality and improving the appearance of welds.

The connection of the electronics housing **2** to the handle **1** by means of an outer recess **21** in the housing **2** and the inner ring projection **61** of the transition sleeve **6** fitting into it ensures sufficient airtightness of the inner space of the electronics housing **2** and the metal outlet pipe **8.**

### Industrial applicability

The invention is applicable to hand-held hot air welding devices for welding plastics.

### List of references

- 1: handle
- 11: split flange of the handle
- 2: electronics housing
- 21: outer recess in the electronics housing
- 23: upper part of the electronics housing
- 24: display
- 25: encoder control member
- 4: electronics housing cover for air hose connection
- 5: air hose
- 6: transition sleeve
- 61: inner annular projection in the transition sleeve
- 7: insulating ring
- 8: outlet pipe
- 81: hem of the outlet pipe
- 82: hot air outlet

## Claims

1. A hand hot air welding device comprising a handle (1), in which control electronics are mounted, wherein the rear part of the handle (1) is associated with an air hose (5), in which is arranged a power supply to the control electronics and further to a heating element arranged in a metal outlet pipe (8) terminated by a hot air outlet (82), **characterized in that** the control electronics are fixedly and airtightly mounted in an electronics housing (2), to which a cover (4) is fixedly attached for connecting the air hose (5), wherein on the electronics housing (2) is pivotally mounted the handle (1) which is fixedly connected to the metal outlet pipe (8).

2. The hand hot air welding device according to claim 1, **characterized in that** the front end of the handle (1) is fixedly mounted in a transition sleeve (6), which is pivotally mounted on the electronic housing (2), wherein it is secured against axial displacement and the ending outlet pipe (8) is attached to its front part via an insulating ring (7).

3. The hand hot air welding device according to claim 2, **characterized in that** a split flange (11) is formed at the front end of the handle (1), provided with at least two projections which fit into corresponding recesses in the transition sleeve (6).

4. The hand hot air welding device according to claim 1 or 2, **characterized in that** an inner ring projection (61) is formed on the inner side of the transition sleeve (6), whereby the inner ring projection (61) is housed in a recess (21) formed on the front part of the electronics housing (2) along its entire outer circumference.

5. The hand hot air welding device according to any of claims 2 to 4, **characterized in that** the transition sleeve (6) is made up of two parts, which are provided with snap laches for mutual connection.

6. The hand hot air welding device according to any of claims 2 to 5, **characterized in that** on the ending outlet pipe (8) is formed a hem (81) in which screw holes are formed for connecting the outlet pipe (8) to the transition sleeve (6) via the insulating ring (7).

## Patentansprüche

1. Hand-Heißluftschweißgerät, das einen Handgriff (1) aufweist, in dem eine Steuerelektronik angeordnet ist, wobei dem hinteren Teil des Handgriffs (1) ein Luftschlauch (5) zugeordnet ist, in dem eine Zuleitung des elektrischen Stromes in die Steuerelektronik und ferner in einen Heizkörper angeordnet ist, der in einem Metallausgangsrohr (8) angeordnet ist, das mit einer Heißluft-Ausgangsöffnung (82) abgeschlossen ist, **dadurch gekennzeichnet, dass** die Steuerelektronik in einer Buchse (2) der Elektronik fest und luftdicht gelagert ist, an die ein Deckel (4) zum Anschluss des Luftschlauches (5) fest angeschlossen ist, wobei auf der Buchse (2) der Elektronik der Handgriff (1) drehbar gelagert ist, der mit dem Metallausgangsrohr (8) fest verbunden ist.

2. Hand-Heißluftschweißgerät nach dem Anspruch 1, **dadurch gekennzeichnet, dass** das vordere Ende des Handgriffs (1) in einer Überwurfspange (6) fest gelagert ist, die auf der Buchse (2) der Elektronik drehbar gelagert ist, wobei diese gegen axiale Verschiebung gesichert ist und an ihren vorderen Teil über einen Isolationsring (7) ein Endausgangsrohr (8) befestigt ist.

3. Hand-Heißluftschweißgerät nach dem Anspruch 2, **dadurch gekennzeichnet, dass** am vorderen Ende des Handgriffs (1) ein geteilter Flansch (11) gebildet wird, der mindestens zwei Vorsprünge aufweist, die in die entsprechenden Aussparungen in der Überwurfspange (6) einrasten.

4. Hand-Heißluftschweißgerät nach dem Anspruch 1 oder 2, **dadurch gekennzeichnet, dass** auf der Innenseite der Überwurfspange (6) ein innerer ringförmiger Vorsprung (61) gebildet ist, der in der Aussparung (21) gelagert ist, die am vorderen Teil der Buchse (2) der Elektronik auf ihrem ganzen Außenumfang gebildet ist.

5. Hand-Heißluftschweißgerät nach einem der Ansprüche 2 bis 4, **dadurch gekennzeichnet, dass** die Überwurfspange (6) aus zwei Teilen besteht, die zum gegenseitigen Verbinden Einschnappelemente aufweisen.

6. Hand-Heißluftschweißgerät nach einem der Ansprüche 2 bis 5, **dadurch gekennzeichnet, dass** am Endausgangsrohr (8) ein Saum (81) gebildet ist, in dem die Öffnungen für Schrauben zum Verbinden des Endausgangsrohres (8) mit der Überwurfspange (6) über den Isolationsring (7) gebildet sind.

## Revendications

1. Dispositif manuel de soudage à l'air chaud comprenant une poignée (1) dans laquelle est disposée l'électronique de commande, tandis qu'à l'arrière de la poignée (1) est rattaché un tuyau d'air (5) dans lequel une alimentation en courant électrique est disposée vers l'électronique de commande et vers un élément chauffant disposé dans un tube de sortie métallique (8) terminé par une ouverture de sortie d'air chaud (82), **caractérisé en ce que** l'électronique de commande est logée de manière fixe et étanche dans un boîtier électronique (2) auquel est fermement fixé un couvercle (4) pour le raccordement du tuyau d'air (5), tandis qu'une poignée (1) est montée de manière rotative sur le boîtier électronique (2) et fermement fixée au tube de sortie métallique (8).

2. Dispositif manuel de soudage à l'air chaud selon la revendication 1, **caractérisé en ce que** l'extrémité avant de la poignée (1) est logée de manière fixe dans une bride d'accouplement (6) qui est logée de manière pivotante sur le boîtier électronique (2) et sécurisée contre un déplacement axial, et qu'un tube de sortie (8) est fixé à la partie avant de la bride par l'intermédiaire d'un anneau d'isolation (7).

3. Dispositif manuel de soudage à l'air chaud selon la revendication 2, **caractérisé en ce qu'**une bride fendue (11) est formée à l'extrémité avant de la poignée (1), pourvue d'au moins deux saillies qui s'engagent dans des évidements correspondants dans la bride d'accouplement (6).

4. Dispositif manuel de soudage à l'air chaud selon la revendication 1 ou 2, **caractérisé en ce qu'**une saillie annulaire intérieure (61) est formée sur le côté intérieur de la bride d'accouplement (6) et logée dans un évidement (21) formé à l'avant du boîtier (2) électronique tout autour de sa circonférence extérieure.

5. Dispositif manuel de soudage à l'air chaud selon l'une des revendications de 2 à 4, **caractérisé en ce que** la bride d'accouplement (6) est formée de deux parties pourvues de clips qui permettent leur connexion.

6. Dispositif manuel de soudage à l'air chaud selon l'une des revendications de 2 à 5, **caractérisé en ce qu'**un bord (81) est formé sur le tube de sortie (8) dans lequel se trouvent des trous pour boulons qui permettent de connecter le tube de sortie (8) à la bride d'accouplement (6) par l'intermédiaire d'un anneau isolant (7).
